# EUROPÄISCHE PATENTANMELDUNG

(11) **EP 3 208 016 A2**
(43) Veröffentlichungstag der Anmeldung: **23.08.2017**
(21) Anmeldenummer: 17156989.0
(22) Anmeldetag: 20.02.2017
(51) Int. Cl.: B23B 9/00, B23Q 5/04, B23Q 1/70

(54) **WERKZEUGHALTER, WERKZEUGSCHLITTEN UND LANGDREHMASCHINE**

(30) Priorität: 18.02.2016 DE 102016102892
(71) Anmelder: SCHIESS Tech GmbH, 10785 Berlin (DE)
(72) Erfinder: Forst, Heinz, 73773 Aichwald (DE); Liu, Zhixu, 73779 Deizisau (DE)
(74) Vertreter: DREISS Patentanwälte PartG mbB

(57) **Zusammenfassung**

Es werden Werkzeughalter, ein Werkzeugschlitten und ein Langdrehautomat vorgestellt, die es erlauben, abhängig vom Durchmesser und der Festigkeit des Stangenmaterials optimal darauf abgestimmte Werkzeughalter einzusetzen.

## Beschreibung

Langdrehautomaten haben sich seit vielen Jahrzehnten bei der Bearbeitung von Werkstücken bewährt, deren Länge in Relation zu ihren Durchmesser groß ist. Sie arbeiten nach dem so genannten Buchsen-Langdrehverfahren. Dabei ist eine in einem Spindelstock gespannte und angetriebene Materialstange durch eine Führungsbuchse geführt. Unmittelbar hinter der Führungsbuchse findet die Bearbeitung statt. Um das Verbiegen des Stangenmaterials unter dem Einfluss der Bearbeitungskräfte zu minimieren, ist es vorteilhaft, die Bearbeitung so nah wie möglich an dem Einspannpunkt des Stangenmaterials in der Führungsbuchse vorzunehmen.

Aus der DE 10 2008 050 656 A1 ist ein Langdrehautomat mit drei NC-gesteuerten Achsen bekannt. Eine Bearbeitungsachse verläuft in Richtung der Drehachse des Spindelstocks und wird als Z-Achse bezeichnet. Der Spindelstock ist in Richtung der Z-Achse verfahrbar und führt bei der Drehbearbeitung die Vorschubbewegung aus. Die verbleibenden zwei Achsen (X-Achse und Y-Achse) des Langdrehautomaten verlaufen orthogonal zueinander und zur Z-Achse. Somit erstrecken sich die drei NC-gesteuerten Achsen (X, Y und Z) in die drei Raumesrichtungen.

An einem Werkzeugschlitten sind mehrere Werkzeuge in Richtung der Y-Achse beabstandet zueinander angeordnet (siehe zum Beispiel Figur 18 der DE 10 2008 050 656 A1).

Der Werkzeugschlitten ist in Richtung der X-Achse versetzt zu der Drehachse des Spindelstocks versetzt. Damit die Schneiden der an dem Werkzeugschlitten befestigten (Dreh-)Werkzeuge das Werkstück erreichen, erstrecken sich die Schäfte der Dreh-Werkzeuge in Richtung der Y-Achse. Die Zustellung der (Dreh-) Werkzeuge erfolgt durch Verfahren des Werkzeugschlittens in Richtung der Y-Achse.

Wenn die Bearbeitung des Werkstücks mit einem anderen an dem Werkzeugschlitten befestigten Werkzeug erfolgen soll, dann wird der Werkzeugschlitten in Richtung der Y-Achse verfahren.

Der Erfindung liegt die Aufgabe zugrunde, einen Werkzeughalter für angetriebene Werkzeuge sowie einen damit kompatiblen Werkzeugschlitten einer Drehmaschine bereitzustellen, die es erlauben, die Bearbeitung des Stangenmaterial mit einem angetriebenen Werkzeug näher an dem Einspannpunkt des Stangenmaterials in der Führungsbuchse durchführen zu können.

Diese Aufgabe wird erfindungsgemäß gelöst durch einen Werkzeughalter umfassend ein Gehäuse, eine in dem Gehäuse drehbar gelagerte Spindel, wobei an einem Ende der Spindel ein angetriebenes Ritzel und an einem entgegengesetzten Ende der Spindel eine Werkzeugaufnahme angeordnet sind, wobei das Gehäuse einen Aufnahmeabschnitt aufweist und wobei eine Drehachse der Spindel exzentrisch zu dem Aufnahmeabschnitt des Gehäuses verläuft.

Dadurch, dass die Spindel exzentrisch zu dem Aufnahmeabschnitt des Werkzeughalters angeordnet ist, kann die Drehachse der Spindel und damit auch die Drehachse des angetriebenen Werkzeugs näher an den Einspannpunkt des Stangenmaterials in der Führungsbuchse gebracht werden, ohne dass es zu einer Kollision zwischen dem angetriebenen Werkzeughalter und der Führungsbuchsenaufnahme bzw. der Führungsbuchse kommt.

Im Ergebnis kann somit die Bearbeitung auch von Stangenmaterial mit einem kleinen Durchmesser und geringer Festigkeit mit einem erfindungsgenmäßen angetriebenen Werkzeug mit hoher Zerspanleistung erfolgen, ohne dass sich das Stangenmaterial unter dem Einfluss der bei der Zerspanung auftretenden Kräfte verbiegt.

Die erfindungsgemäße exzentrische Anordnung der Spindel relativ zu dem Aufnahmeabschnitt ist vor allem dann von großem Vorteil, wenn der Durchmesser des bearbeiteten Stangenmaterials klein ist und/oder mit kleinen Werkzeugen gearbeitet wird, die in der Regel hohe Arbeitsdrehzahlen benötigen.

Die exzentrische Anordnung hat aber auch zur Folge, dass bei vorgegebenen Abmessungen des Aufnahmeabschnitts, der Durchmesser der Spindel und die Lager, in denen die Spindel drehbar gelagert ist, relativ klein sind. Dadurch reduziert sich deren Rotationsträgheitsmoment, was von Vorteil ist. Da die Bearbeitungskräfte bei solchen Werkzeugen relativ klein sind, ist die Steifigkeit von Spindel und Lagerung trotzdem ausreichend.

Damit nun in dem gleichen Werkzeugschlitten auch Werkzeughalter eingesetzt werden können, die für Werkzeuge mit einem großen Durchmesser geeignet sind, ist erfindungsgemäß ein zweiter Werkzeughalter vorgesehen, bei dem die Drehachse der Spindel konzentrisch zu dem Aufnahmeabschnitt des Gehäuses verläuft. Dann können die Abmessungen des Aufnahmeabschnitts optimal ausgenützt werden, um eine steife Spindel und eine sehr belastbare Lagerung der Spindel in dem Gehäuse zu ermöglichen.

Durch die beiden verschiedenen Werkzeughalter ist es also möglich, Werkzeuge mit kleinem Durchmesser sehr nah an dem Einspannpunkt des Stangenmaterials in der Führungsbuchse einzusetzen. Dadurch wird die Verbiegung des Stangenmaterials während der Bearbeitung minimiert. In Folge dessen verbessern sich die Fertigungsgenauigkeit und die Produktivität.

Um mit dem gleichen Werkzeugschlitten und auf der gleichen Drehmaschine auch Stangenmaterial mit größerem Durchmesser und Werkzeugen mit größerem Durchmesser mit hoher Zerspanleistung bearbeiten zu können, kann in die gleiche Aufnahme des Werkzeugschlittens ein anderer Werkzeughalter eingesetzt werden, bei dem die Drehachse der Spindel konzentrisch zu dem Aufnahmeabschnitt des Werkzeughalters angeordnet ist.

Es wird also durch die zwei unterschiedlichen Typen von angetriebenen Werkzeughaltern einerseits die hochpräzise Bearbeitung von Stangenmaterial mit sehr kleinem Durchmesser ermöglicht und andererseits kann auf der gleichen Maschine auch Stangenmaterial mit größerem Durchmesser, bei dem auch größere Spanvolumina abgespant werden müssen, mit hoher Zerspanleistung bearbeitet werden können.

Beide Werkzeughalter sind auf spezielle Einsatzbereiche ausgelegt und ermöglichen jeweils in ihrem Einsatzbereich eine optimale Fertigungsqualität bei gleichzeitig hoher Produktivität.

Es hat sich als vorteilhaft erwiesen, wenn der Aufnahmeabschnitt im Querschnitt polygonförmig, bevorzugt quadratisch, rechteckig, oder kreisförmig, ist. Dann nämlich kann der Werkzeughalter in eine komplementär geformte Aufnahme in einem Werkzeugschlitten ohne weiteres eingesetzt und dort arretiert werden. Wenn der Aufnahmeabschnitt einen polygonförmigen oder rechteckigen Querschnitt hat, dann ist die richtige Positionierung des Werkzeughalters relativ zu dem Werkzeugschlitten gewährleistet, weil der Werkzeughalter nur in der richtigen Position in die Aufnahme des Werkzeugschlittens eingeführt werden kann.

Zusätzlich oder alternativ kann der Werkzeughalter durch einen Vorzentrierstift gegen Verdrehen gesichert werden.

Das Ritzel am ersten Ende der Spindel arbeitet mit einem Kronenrad zusammen, das auf der Antriebswelle des Werkzeugschlittens montiert ist.

Es ist auch möglich anstelle der bevorzugten Kombination aus Ritzel und Kronenrad der Antrieb auch mit Kegelrädern (mit und ohne Achsversatz) ausgeführt werden kann. Allerdings haben Kegelräder den Nachteil, dass diese sehr genau relativ zueinander positioniert werden müssen. Das erhöht die Fertigungskosten und erschwert die Austauschbarkeit der Werkzeughalter.

Die erfindungsgemäße Aufgabe wird auch dadurch gelöst, dass ein Werkzeugschlitten zur Aufnahme angetriebener Werkzeughalter bereitgestellt wird, der eine Antriebswelle und mindestens eine Aufnahme für einen Werkzeughalter umfasst, wobei die Antriebswelle im Bereich der mindestens einen Aufnahme mindestens ein Kronenrad aufweist, und dass das Kronenrad mit dem angetriebenen Ritzel eines in die Aufnahme eingesetzten Werkzeughalters nach einem der vorhergehenden Ansprüche kämmt.

Wenn die Drehachse der Spindel des Werkzeughalters exzentrisch zu dem Aufnahmeabschnitt und damit auch der Aufnahme verläuft, dann muss die Verzahnung des Kronenrads und des ersten Ritzels entsprechend angepasst werden. Diese Anpassung weist Ähnlichkeiten zwischen dem Übergang von einen Kegelrad zu einer Hypoid-Verzahnung auf.

Wenn die Drehachse der Spindel des Werkzeughalters sich mit der Drehachse der Antriebswelle des Werkzeugschlittens und damit auch des Kronenrads schneidet, handelt es sich um ein konventionelles Kronenrad bei dem die Zähne radial ausgerichtet sind. Beide Alternativen können bei der Erfindung eingesetzt werden. Dadurch ergibt sich ein weiterer konstruktiver "Freiheitsgrad".

Erfindungsgemäß ist nun weiter vorgesehen, dass im Bereich der mindestens einen Aufnahme ein zweites treibendes Kronenrad an der Antriebswelle angeordnet ist. Damit ist der der erfindungsgemäße Werkzeugschlitten mit zwei Kronenrädern für jede Aufnahme ausgerüstet, von denen eines mit einem Werkzeughalter mit exzentrisch gelagerter Spindel und das andere mit einem Werkzeughalter mit konzentrisch gelagerter Spindel zusammenwirkt.

Durch diese Ausgestaltung ist es möglich, in die gleiche Aufnahme eines Werkzeugschlittens entweder einen angetriebenen Werkzeughalter nach Anspruch 1 oder einen angetriebenen Werkzeughalter nach Anspruch 2 einzusetzen.

Je nachdem, ob ein Werkzeughalter nach Anspruch 1 oder nach Anspruch 2 in die Aufnahme eingesetzt wird, kämmt das erste Kronenrad oder das zweite Kronenrad des Werkzeugschlittens mit dem Ritzel des eingesetzten Werkzeughalters. Diese Zusammenhänge werden weiter unten im Zusammenhang mit der Figurenbeschreibung noch im Detail erläutert.

Weitere Vorteile und vorteilhafte Ausgestaltungen der Erfindung sind den nachfolgenden Zeichnungen, deren Beschreibung und den Patentansprüchen einnehmbar. Alle in der Zeichnung, deren Beschreibung und den Patentansprüchen, genannten Merkmale können sowohl einzeln als auch in beliebiger Kombination miteinander erfindungswesentlich sein.

Es zeigen:
- Figur 1: eine schematische Darstellung der wichtigsten Baugruppen eines Langdrehautomaten,
- Figur 2: eine isometrische Darstellung der Führungsbuchsenaufnahme und des Werkzeugschlittens eines erfindungsgemäßen Langdrehautomaten mit horizontaler Y-Achse,
- Figur 3: eine isometrische Darstellung eines erfindungsgemäßen Werkzeugschlittens mit zwei erfindungsgemäßen Werkzeughaltern und einer Wirbeleinrichtung, (mit X- und Y-Achse)
- Figur 4: eine isometrische Darstellung ähnlich der Figur 3, mit dem Unterschied, dass eine Vorrichtung zum Fräsen von Verzahnungen angebaut ist, (mit X- und Y-Achse)
- Figur 5: einen Längsschnitt durch einen erfindungsgemäßen Werkzeugschlitten mit eingesetzten erfindungsgemäßen Werkzeughaltern,
- Figur 6: einen Querschnitt durch ein erstes Ausführungsbeispiel eines erfindungsgemäßen angetriebenen Werkzeughalters, mit exzentrischem Aufnahmeschaft,
- Figur 7: einen Schnitt durch ein zweites Ausführungsbeispiel eines erfindungsgemäßen angetriebenen Werkzeughalters mit konzentrischem Aufnahmeschaft,
- Figur 8: einen Querschnitt durch einen Werkzeugschlitten mit eingesetztem Werkzeughalter gemäß dem ersten Ausführungsbeispiel mit exzentrischem Aufnahmeschaft,
- Figur 9: einen Querschnitt durch einen Werkzeugschlitten mit eingesetztem Werkzeughalter gemäß dem zweiten Ausführungsbeispiel mit konzentrischem Aufnahmeschaft,
- Figuren 10 und 11: das Zusammenwirken eines Werkzeugschlittens mit den beiden erfindungsgemäßen Werkzeughaltern

### Beschreibung der Ausführungsbeispiele

Aus Gründen der Übersichtlichkeit werden in den Figuren nicht immer alle Bezugszeichen eingetragen. Jedes Bezugszeichen ist jedoch mindestens einmal dargestellt.

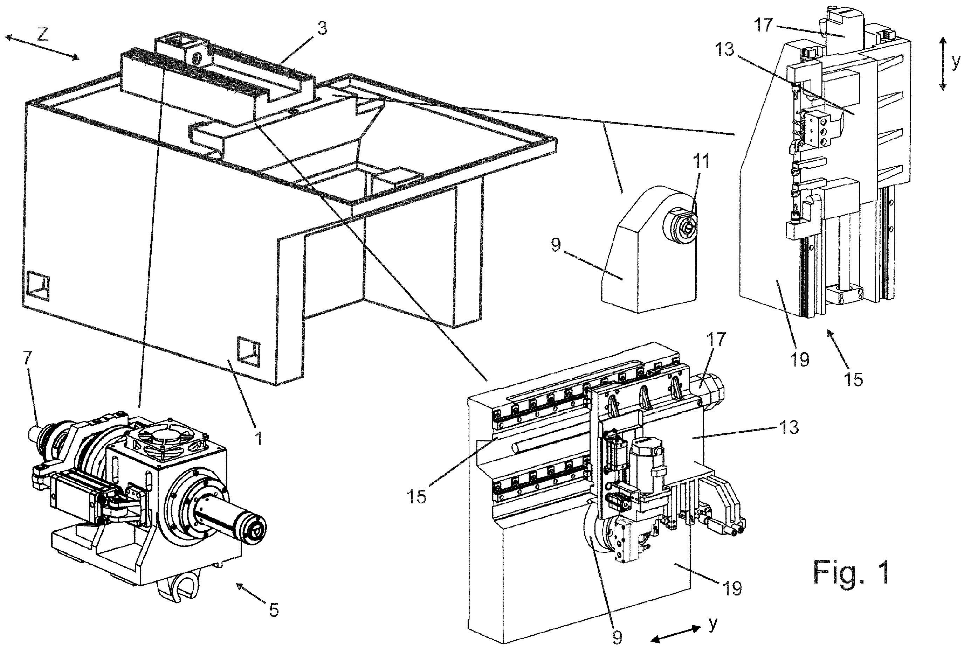

In der Figur 1 werden in der Art einer Explosionsansicht die wichtigsten Baugruppen eines Ausführungsbeispiels eines erfindungsgemäßen Langdrehautomaten dargestellt. Es handelt sich dabei um eine Zwei-Achs-Maschine.

Der Langdrehautomat umfasst ein Maschinenbett 1 an dem eine Linearführung 3 für den Spindelstock 5 ausgebildet ist. Der Spindelstock 5 umfasst neben dem Gegenstück für die Linearführung 3 einen integrierten Spindelantrieb und eine Klemmvorrichtung für das Stangenmaterial 7 (nicht sichtbar in der Figur 1) aus dem später das fertige Werkstück hergestellt wird.

Auf dem Maschinenbett wird eine Führungsbuchsenaufnahme 9 mit einer Führungsbuchse 11 befestigt. Die Führungsbuchse 11 dient dazu, das Stangenmaterial 7 in unmittelbarer Nähe der zerspanenden Bearbeitung zu stützen und somit eine genaue Bearbeitung mit hoher Zerspanleistung zu ermöglichen, obwohl das Stangenmaterial 7 einen relativ kleinen Durchmesser aufweist. Insbesondere, wenn das Stangenmaterial 7 aus einem Material besteht, bei dem die Zerspankräfte bezogen auf die Festigkeit des Materials relativ groß sind, tritt vor allem bei der Bearbeitung kleiner Durchmesser (D < 10 mm) das Problem auf, dass das Stangenmaterial unter dem Einfluss der Zerspankräfte dem Werkzeug "ausweicht". Darunter leidet die Präzision der Bearbeitung. Um dies zu vermeiden, kann die Zerspanleistung reduziert werden, was unerwünscht ist, weil dadurch die Produktivität leidet.

Der erfindungsgemäße Ansatz sieht vor, die Bearbeitung möglichst nah an der Führungsbuchse 11 vorzunehmen. Die beanspruchte Erfindung stellt eine Lösung bereit, die eine Bearbeitung mit Hilfe angetriebener Werkzeug in unmittelbarer Nähe der Führungsbuchse 11 auch und gerade bei kleinen Drehdurchmessern erlaubt.

In der Figur 1 auf der rechten Seite sind zwei alternative Ausführungsformen eines erfindungsgemäßen Werkzeugschlittens 13 dargestellt. Bei dem in Figur 1 rechts oben dargestellten Ausführungsbeispiel ist der Werkzeugschlitten 13 in vertikaler Richtung (siehe die Y-Achse) verfahrbar. Dies bedeutet, dass eine Führungskonsole 19 eine Linearführung 15 des Werkzeugschlittens 13 aufweist, die vertikal ausgerichtet ist. In die Führungskonsole 19 können die Führungsbuchsenaufnahme 9 und die Führungsbuchse 11 integriert werden. Im Zusammenhang mit der Erfindung kann die Führungskonsole 19 mit oder ohne Führungsbuchsenaufnahme 9 realisiert werden.

Bei dem in Figur 1 rechts unten dargestellten Ausführungsbeispiel ist die Y-Achse in horizontaler Richtung ausgerichtet. In Folge dessen ist die Linearführung 15 horizontal ausgerichtet. Bei diesem Ausführungsbeispiel ist die Führungsbuchsenaufnahme 9 in die Führungskonsole 19 integriert. Dadurch wird Bauraum eingespart und die Zahl der Komponenten wird reduziert.

Die Erfindung lässt sich bei beiden Ausführungsformen realisieren. Sie kann bei Langdrehautomaten mit zwei, drei oder mehr Bearbeitungsachsen gleichermaßen eingesetzt werden.

In dem in Figur 1 dargestellten Ausführungsbeispiel ist der Werkzeugschlitten 13 jeweils mit einer Linearführung 15 und einem Stellmotor 17 ausgestattet. Ein Teil der Linearführung 15 ist auf der Führungskonsole 19 angeordnet, die wiederum mit dem Maschinenbett 1 verschraubt oder auf andere Weise verbunden werden kann.

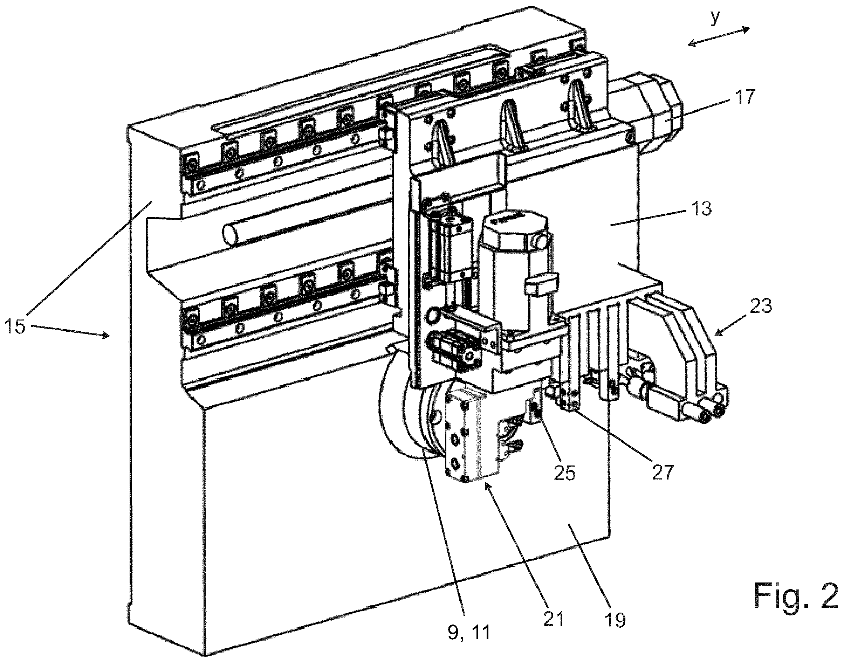

In den meisten Fällen ist es sinnvoll und vorteilhaft, die Führungsbuchsenaufnahme 9 bzw. die Führungsbuchse 11 in die Führungskonsole 19 zu integrieren. Diese Konfiguration ist in der Figur 2 dargestellt. Es handelt sich dabei um eine Ausführungsform des erfindungsgemäßen Langdrehautomaten mit horizontal verlaufender Y-Achse.

Bei diesem Ausführungsbeispiel ist der Werkzeugschlitten 13 oberhalb der Drehachse der Führungsbuchse 11 angeordnet. Dies hat zur Folge, dass der Werkzeugschlitten 13 in Richtung der Y-Achse verfahren werden kann, ohne dass er mit einem zu bearbeitenden Werkstück (nicht dargestellt in Figur 2) kollidiert, das durch die Führungsbuchse 11 in den Bearbeitungsraum ragt.

An dem Werkzeugschlitten 13 sind verschiedene angetriebene und nicht angetriebene Werkzeuge befestigt. Von links nach rechts sind dies ein Werkzeug 21 mit zwei angetriebenen Bohrern, die Bohrungen in Richtung der Y-Achse (Querbohrungen) in das Werkstück (nicht dargestellt) einbringen kann. Zum Antrieb der Bohrer hat weist dieses Werkzeug 21 zwei Ritzel (nicht sichtbar in Figur 2) auf.

Ganz rechts ist ein Kombinationswerkzeug 23 angeordnet, das einen Spiralbohrer, einen Gewindebohrer und einen Senker (nicht sichtbar) umfasst.

Spiralbohrer, Gewindebohrer und Senker sind in Richtung der Z-Achse ausgerichtet und zwar genau auf Höhe der Z-Achse. Dadurch ist es möglich eine Längsbohrung und/oder ein Innengewinde in das Werkstück einzubringen.

Zwischen dem Werkzeug 21 mit angetriebenen Bohrern und dem Kombinationswerkzeug 23 sind zwei nur schematisch dargestellte Drehmeißel 25 und 27 angeordnet.

Selbstverständlich sind die Darstellung und Aufzählung von angetriebenen und nicht angetriebenen Werkzeugen nicht abschließend.

In der Figur 2 ist der Werkzeugschlitten 13 nahezu ganz nach rechts in der Linear-Führung 15 verfahren, so dass sich das angetriebene Werkzeug 21 in unmittelbarer Nähe der Führungsbuchse 11 befindet. Mit einem der Bohrer dieses Werkzeug 21 kann eine Querbohrung in das nicht dargestellte Werkstück eingebracht werden. Die Vorschubbewegung dieses Werkzeugs 21 verläuft in Richtung der Y-Achse und wird vom Werkzeugschlitten 13, bzw. dessen Stellmotor 17 erzeugt. Weitere Details und Erläuterungen zu diesem Langdrehautomaten können der nachveröffentlichten DE 10 2015 206567 der gleichen Anmelderin entnommen werden.

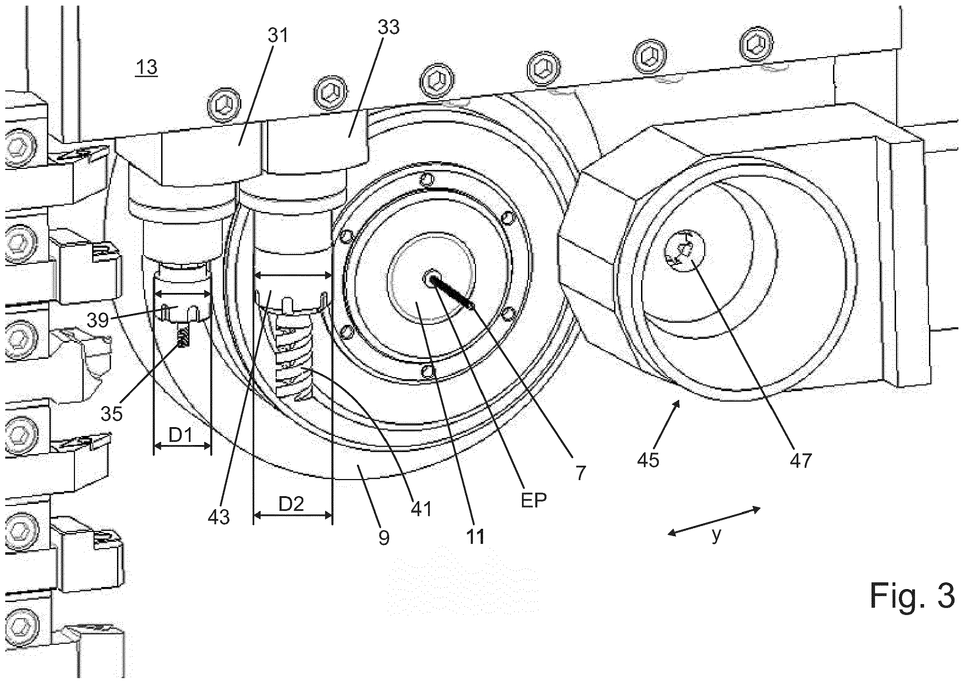

In der Figur 3 ist eine Isometrie des zu bearbeitenden Stangenmaterials 7, der Führungsbuchse 11 sowie der Führungsbuchsenaufnahme 9 dargestellt. Diese Bauteile bzw. das Stangenmaterial 7 sind ortsfest, während der Schlitten 13 und die an ihm befestigten angetriebenen Werkzeughalter 31 und 33 sich in Richtung der Y-Achse (d.h. in Figur 3 in horizontaler Richtung) relativ zu dem Stangenmaterial 7, der Führungsbuchse 11 und der Führungsbuchsenaufnahme 9 bewegen können.

Der angetriebene Werkzeughalter 31 hält ein Werkzeug 35 mit einem kleinen Durchmesser. Gespannt wird das Werkzeug 35 mit einer Spannmutter 39 mit einem Durchmesser D₁.

Weil das Werkzeug 35 einen kleinen Durchmesser und damit auch einen dünnen Schaft hat, kann die Spannmutter 39 ebenfalls einen relativ kleinen Durchmesser D₁ aufweisen.

Der Werkzeughalter 33 nimmt ein Werkzeug 41 auf, dessen Durchmesser sehr viel größer ist, als der des Werkzeugs 35.

Infolgedessen sind auch der Schaft (nicht sichtbar) des Werkzeugs 41 dicker und ein Durchmesser D₂ der Spannmutter 43 größer als der Durchmesser D₁ der Spannmutter 39.

Allgemein kann man sagen, dass je kleiner der Durchmesser D der Spannmuttern 39 bzw. 43 ist, desto näher kann man mit dem Werkzeug 35 bzw. 41 in einem der angetriebenen Werkzeughalter 31, 33 an die Führungsbuchse 11 bzw. die Führungsbuchsenaufnahme 9 der Konsole 19 heranfahren. In anderen Worten: Die Bearbeitung des Stangenmaterials 7 kann in unmittelbarer Nähe des Einspannpunkts EP erfolgen.

An der in Figur 3 rechten Seite des Werkzeugschlittens 13 ist eine Vorrichtung zum Gewindewirbeln 45 angeordnet. Sie ist mit dem Werkzeugschlitten 13 Verbunden und wird auch über die Antriebswelle des Werkzeugschlittens 13 angetrieben.

Die Vorrichtung 45 ist, bezogen auf den Durchmesser des Stangenmaterials, relativ sperrig. Sie weist in der Mitte einen angetriebenen Wirbelring 47 auf.

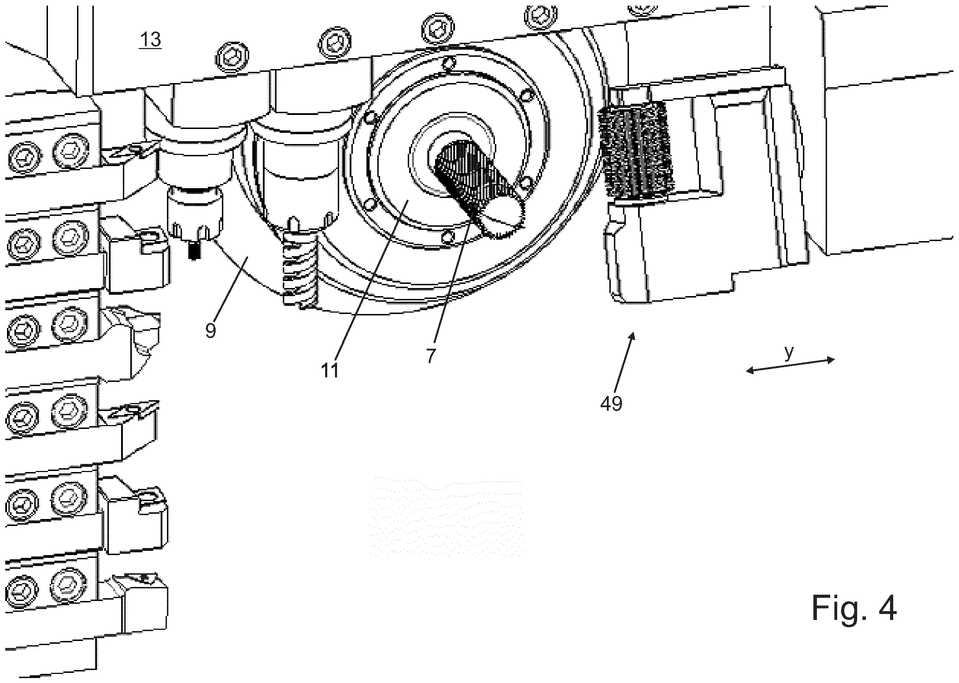

In der Figur 4 ist eine Vorrichtung 49 zum Fräsen von Verzahnungen an dem Werkzeugschlitten 13 angebracht.

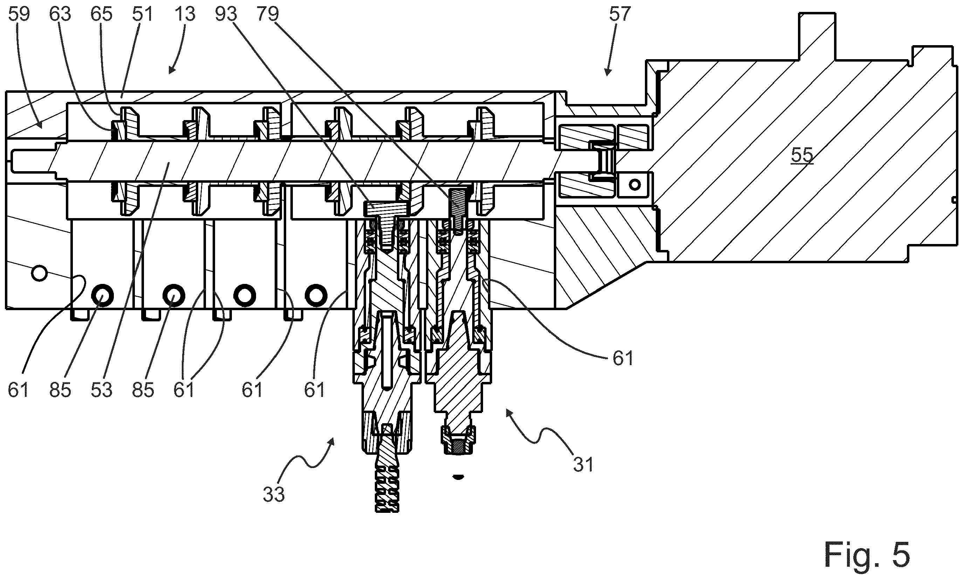

In der Figur 5 ist ein erfindungsgemäßer Werkzeugschlitten 13 im Längsschnitt dargestellt. Es handelt sich dabei um eine vereinfachte schematische Darstellung, die jedoch die für die Erfindung wesentlichen Einzelheiten deutlich zeigt.

Der Werkzeugschlitten 13 umfasst ein Gehäuse 51, in der eine Antriebswelle 53 drehbar gelagert ist. Die Lagerung der Antriebswelle 53 ist nicht dargestellt. An dem Gehäuse 51 ist ein Antriebsmotor 55 angeflanscht, der über eine Kupplung 57 die Antriebswelle 53 antreibt.

An dem in Figur 5 linken Ende der Antriebswelle 53 ist ein Mitnehmer 59 ausgebildet, der zum Antrieb der Vorrichtung 45 zum Gewindewirbel oder der Fräsvorrichtung 49 (siehe die Figuren 3 und 4) dienen kann. Diese Vorrichtungen werden an dem in Figur 5 linken Ende des Gehäuses 51 angeflanscht. Das Mitnehmerelement 59 kann beispielsweise als Zweiflach ausgebildet sein.

In Figur 5, unterhalb der Antriebswelle 53, sind in dem Gehäuse 51 insgesamt sechs Aufnahmen 61 ausgebildet, die dazu dienen, Werkzeughalter 31 und 33 aufzunehmen.

Auf der Antriebswelle 53 sind jeder Aufnahme 61 zwei Kronenräder 63 und 65 zugeordnet. Aus Gründen der Übersichtlichkeit sind nur zwei der Kronenräder mit Bezugszeichen versehen.

Die Kronenräder 63 und 65 sind drehfest mit der Antriebswelle 53 verbunden, so dass sie über die Kupplung 57 von dem einen Antriebsmotor 55 angetrieben werden können.

Das Kronenrad 63 ist bei diesem Ausführungsbeispiel mit einer Verzahnung versehen, die Ähnlichkeiten mit Hypoid-Verzahnung hat, weil sich die Drehachsen des Zahnrads 63 und des Ritzels 79 nicht schneiden.

Das zweite Kronenrad 65 kämmt mit einem Ritzel 93, deren Drehachsen sich schneiden.

Die Verzahnung des ersten Kronenrads 63 ragt in axialer Richtung über die Verzahnung des Kronenrads 65 hinaus. Anders ausgedrückt: In Figur 5 ist die Verzahnung der Kegelräder 63 weiter links als die Verzahnung der Kegelräder 65 angeordnet. Des Weiteren ist Durchmesser der Kegelräder 63 kleiner als bei den Kegelrädern 65.

In der Figur 5 sind zwei unterschiedlich gebaute angetriebene Werkzeughalter 31 und 33 in jeweils eine Aufnahme 61 des Werkzeugschlittens 13 eingesetzt.

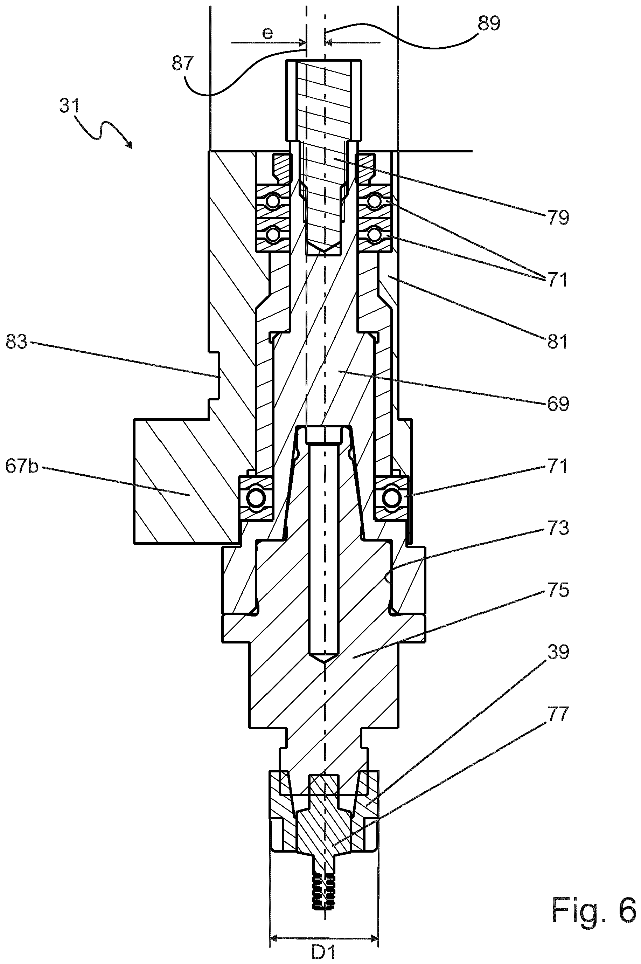

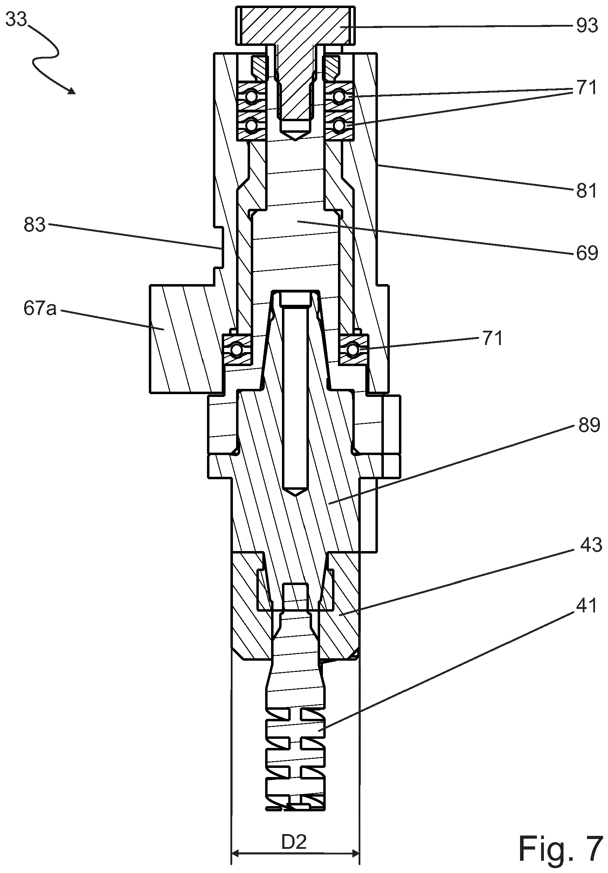

In den Figuren 6 und 7 sind zwei Schnitte durch die Werkzeughalter 31 und 33 dargestellt, wobei die Schnittebenen senkrecht zur Zeichnungsebene der Figur 5 liegen.

In der Figur 6 ist der Werkzeughalter 31 geschnitten dargestellt.

Der Werkzeughalter 31 umfasst ein Gehäuse 67b, in dem eine Spindel 69 drehbar gelagert ist. Die Lagerung umfasst drei Kugellager 71.

An dem in Figur 6 unteren Ende der Spindel 69 ist eine gestufte Bohrung 73 ausgebildet, in der eine Werkzeugaufnahme 75 (Wechselsystem) formschlüssig aufgenommen ist. Das Werkzeug wird über die Spannmutter 39 in der Werkzeugaufnahme 75 gehalten.

Alternativ zu der zweiteiligen Ausführung ist es auch möglich, die Spindel 69 und die Werkzeugaufnahme 75 einteilig auszuführen.

An dem in Figur 6 oberen Ende ist ein angetriebenes Ritzel 79 an der Spindel 69 befestigt.

Das Gehäuse 67b weist einen Aufnahmeabschnitt 81 auf, der so gestaltet ist, dass er in die Aufnahme 61 des Gehäuses 51 des Werkzeugschlittens 13 eingesetzt werden kann.

Der Aufnahmeabschnitt 81 hat eine prismatische Form; er kann beispielsweise einen quadratischen, rechteckigen oder kreisrunden Querschnitt haben. Bei einem runden Schaft ist ein Vorzentrierstift vorgesehen, der mit einer komplementären Ausnehmung eine Verdrehsicherung bewirkt. Ein ähnliches Konstruktionsprinzip ist aus der DIN 69880 bekannt.

An dem Aufnahmeabschnitt 81 ist in der Figur 6 an der linken Seite eine Vertiefung 83 zu sehen. In diese Vertiefungen greifen Gewindestifte 85 (siehe Figur 5 und die Figuren 8 und 9) ein. Durch diese Gewindestifte 85 wird ein Werkzeughalter 31 oder 33 in der Aufnahme 61 des Werkzeugschlittens 13 fixiert und arretiert.

Mit dem Bezugszeichen 87 ist eine Mittelachse des Aufnahmeabschnitts 81 bezeichnet. Die Drehachse der Spindel 69 ist mit dem Bezugszeichen 89 versehen.

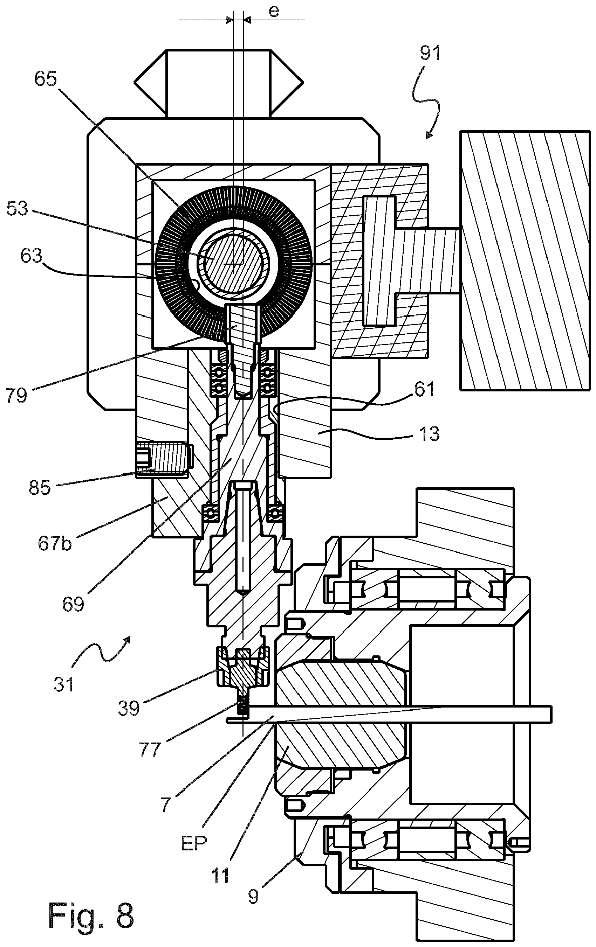

Es ist ersichtlich, dass die Drehachse 89 und die Mittelachse des Aufnahmeabschnitts 81 parallel aber versetzt zueinander angeordnet sind. Dieser Versatz ist in der Figur 6 mit dem Bezugszeichen "e" gekennzeichnet. Dies bedeutet, dass in der Schnittebene der Figur 6 die Lager 71 und die Spindel 69 nicht mittig, sondern außermittig (exzentrisch) zu dem Aufnahmeabschnitt 81 in dem Gehäuse 67b des Werkzeughalters 31 angeordnet sind. Dies führt dazu, dass die Spindel 69 und mit ihr auch das Werkzeug 77 in der Figur 6 entsprechend dem Versatz e nach rechts rücken. Dadurch kann das Werkzeug 77 sehr nahe an den Einspannpunkt EP des Stangenmaterials 7 in der Führungsbuchse 9 bewegt werden (siehe die Figur 8). Infolgedessen verbiegt sich das Stangenmaterial 7 unter dem Einfluss der Zerspankräfte weniger und die Bearbeitungsqualität sowie die Produktivität wird verbessert.

Dieser Zusammenhang ist in der Figur 8 gut zu erkennen. In der Figur 8 sind die Führungsbuchsen 11 und die Führungsbuchsenaufnahme 9 mit eingespanntem Stangenmaterial 7 geschnitten dargestellt. Ebenso ist der Werkzeughalter 31 geschnitten in einer Aufnahme 61 des Werkzeugschlittens 13 dargestellt.

Die Führung des Schlittens 13 ist in der Figur 8 ebenfalls schematisch dargestellt und hat das Bezugszeichen 91.

Das angetriebene Ritzel 79 kämmt mit dem treibenden Kronenrad 63 der Antriebswelle 53. Weil das angetriebene Ritzel 79 mit seiner Drehachse versetzt zur Drehachse der Antriebswelle 53 positioniert ist, ähnelt die Verzahnung des Kronenrads 63 und des Ritzels 79 einer Hypoid-Verzahnung.

Weil, wie aus der Figur 5 ersichtlich ist, das treibende Kronenrad 63 in Richtung der Antriebswelle weiter nach links positioniert ist als das Kronenrad 65, muss der Durchmesser des von dem Kronenrad 63 angetriebenen Ritzels 79 relativ klein sein.

Aus dem Durchmesser des Kronenrads 63 und dem Durchmesser des Ritzels 79, die beide in der Figur 8 gut zu erkennen sind, ergibt sich das Übersetzungsverhältnis i der Verzahnung zwischen den Kegelrädern 63 und 79. Es ist bei dem Ausführungsbeispiel relativ hoch. Es kann beispielsweise i = 3 sein. Deswegen hat die Spindel 69 und mit ihr das Werkzeug 77 eine Arbeitsdrehzahl, die entsprechend dem Übersetzungsverhältnis i größer ist als die Drehzahl der Antriebswelle 53. Dieses relativ hohe Übersetzungsverhältnis trägt der Tatsache Rechnung, dass das Werkzeug 77 einen relativ kleinen Durchmesser hat und daher zum Erreichen der gewünschten Schnittgeschwindigkeit eine relativ hohe Arbeitsdrehzahl benötigt.

In der Figur 7 ist der Werkzeughalter 33 im Schnitt dargestellt. Gleiche Bauteile werden mit dem gleichen Bezugszeichen versehen und es werden nachfolgend nur die für die Erfindung wesentlichen Merkmale erläutert.

Bei diesem Ausführungsbeispiel sind die Spindeln 69 und die Lagerung 71 zentral in dem Aufnahmeabschnitt 81 angeordnet, so dass die Drehachse der Spindel 69 und die Symmetrieachse 87 des Aufnahmeabschnitts 81 ineinander fallen. Ein Versatz "e" ist somit nicht vorhanden. Das zugehörige Gehäuse hat das Bezugszeichen 67a.

Der Durchmesser der Spannmutter 43 ist in der Figur 7 ebenfalls mit D₂ eingetragen. Der Durchmesser D₁ der Spannmutter 39 des Werkzeughalters 31 ist kleiner als der Durchmesser D₂ der Spannmutter 43 des Werkzeughalters 33.

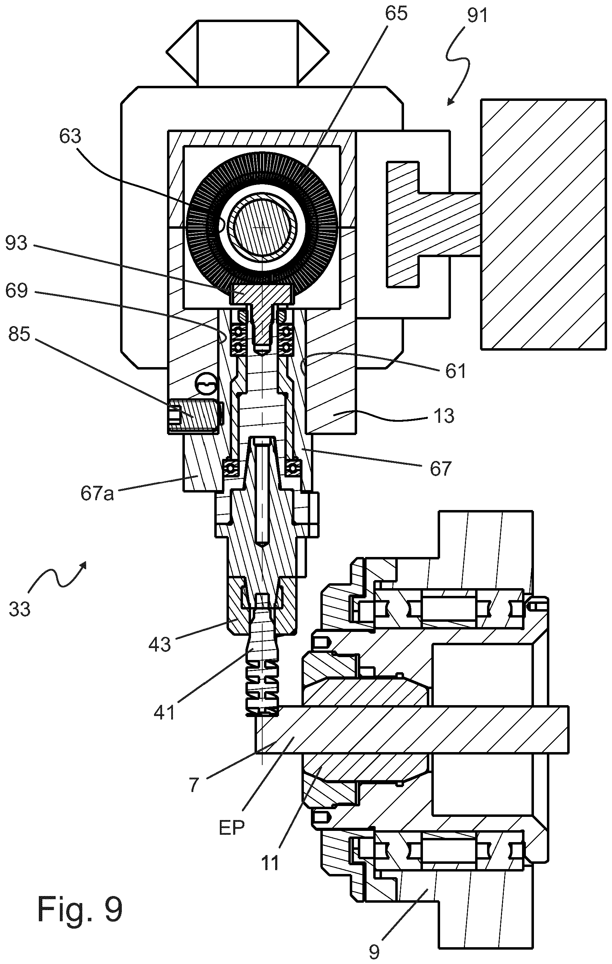

In der Figur 9 ist die Situation dargestellt, dass der Werkzeughalter 33 in eine Aufnahme 61 des Werkzeugschlittens 13 eingesetzt ist.

In den Figuren 7 und 9 wird deutlich, dass an dem "oberen" Ende der Spindel 69 ein angetriebenes Ritzel 93 montiert ist, das einen größeren Durchmesser als das Ritzel 79 des Werkzeughalters 31 aufweist und außerdem kürzer ausgebildet ist. Das Ritzel 93 kämmt mit dem Kronenrad 65 (siehe die Figuren 5 und 9).

Weil das Kronenrad 93 einen deutlich größeren Durchmesser als das Kronenrad 79 hat, ist das Übersetzungsverhältnis i zwischen dem Kronenrad 65 und dem Ritzel 93 kleiner als das Übersetzungsverhältnis i zwischen dem Kronenrad 63 und dem Ritzel 79. Bei einem ausgeführten Beispiel ist das Übersetzungsverhältnis i zwischen dem Kronenrad 65 und dem Ritzel 93 gleich 2 (i= 2).

Dies bedeutet, dass die Drehzahl des Werkzeughalters 33, gleiche Drehzahl der Antriebswelle 53 vorausgesetzt, niedriger ist als die Drehzahl der Spindel 69 des Werkzeughalters 31. Dies ist insofern von Vorteil, als der Werkzeughalter 33 zur Aufnahme von Werkzeugen 41 mit relativ großem Durchmesser vorgesehen ist und diese Werkzeuge mit niedrigeren Drehzahlen betrieben werden als die kleinen und dünnen Werkzeuge 35, die in einem Werkzeughalter 31 eingespannt werden.

In der Figur 9 ist die Situation dargestellt, in der ein Werkzeughalter 33 in eine Aufnahme 61 des Werkzeugschlittens 13 eingesetzt ist.

Mit dem Werkzeughalter 33 wird ein Stangenmaterial 7 bearbeitet, das einen deutlich größeren Durchmesser hat als das Stangenmaterial 7, welches in der Figur 8 dargestellt ist und das mit dem Werkzeug 77 des Werkzeughalters 31 bearbeitet wird.

Wegen des größeren Durchmessers des Stangenmaterials 7 ist es biegesteifer und es stellt kein Problem dar, dass das Werkzeug 41 zum Beispiel wegen des größeren Durchmessers D₂ der Spannmutter 43 nicht so nahe an den Einspannpunkt EP des Stangenmaterials 7 in der Führungsbuchse 11 gebracht werden kann, wie dies beim Einsatz des Werkzeughalters 31 mit der kleineren Spannmutter 39 der Fall ist. Dieser Zusammenhang ergibt sich besonders gut aus dem Vergleich der Figuren 8 und 9.

Im Ergebnis führt der Einsatz von zwei Werkzeughaltern 31 und 33 in Verbindung mit den zwei Kronenrädern 63 und 65 an jeder Aufnahme 61 des Werkzeugschlittens 13 dazu, dass je nach eingesetztem Stangenmaterial 7 ein Werkzeughalter 31, 33 eingesetzt werden kann, der bei der Bearbeitung des Stangenmaterials jeweils eine optimale Produktivität und Fertigungsqualität der bearbeiteten Werkstücke ermöglicht.

Wenn Stangenmaterial 7 mit kleinem Durchmesser bearbeitet werden soll, dann wird bevorzugt der Werkzeughalter 31 eingesetzt. Dieser Werkzeughalter 31 hat bei einer vorgegebenen Drehzahl der Antriebswelle 53 eine hohe Arbeitsdrehzahl der Spindel 69, was den eingesetzten Werkzeugen mit kleinen Durchmessern entgegenkommt. Außerdem kann wegen des kleineren Durchmessers D1 der Spannmutter 39 das Werkzeug 77 sehr nahe an den Einspannpunkt EP des Stangenmaterials gebracht werden.

Wenn, wie in der Figur 9 dargestellt, Stangenmaterial 7 mit relativ großem Durchmesser eingesetzt werden soll, dann empfiehlt sich der Einsatz eines Werkzeughalters 33. Bei diesem Werkzeughalter 33 ist die Lagerung der Spindel koaxial bzw. konzentrisch zu dem Aufnahmeabschnitt 81 angeordnet. Dies erlaubt eine steifere Lagerung der Spindel und eine steifere Spindel 69. Dieser Werkzeughalter 33 eignet sich bevorzugt zum Einsatz von Werkzeugen mit relativ großem Bearbeitungsdurchmesser. Daher sind eine steife Spindel und eine ebenso leistungsfähige Lagerung 71 erforderlich. Bei gleicher Drehzahl der Antriebswelle 53 hat die Spindel des Werkzeughalters 33 eine niedrigere Arbeitsdrehzahl als die des Werkzeughalters 31, was im Zusammenhang mit den größeren Werkzeugen, die im Werkzeughalter 33 eingesetzt werden, angemessen ist.

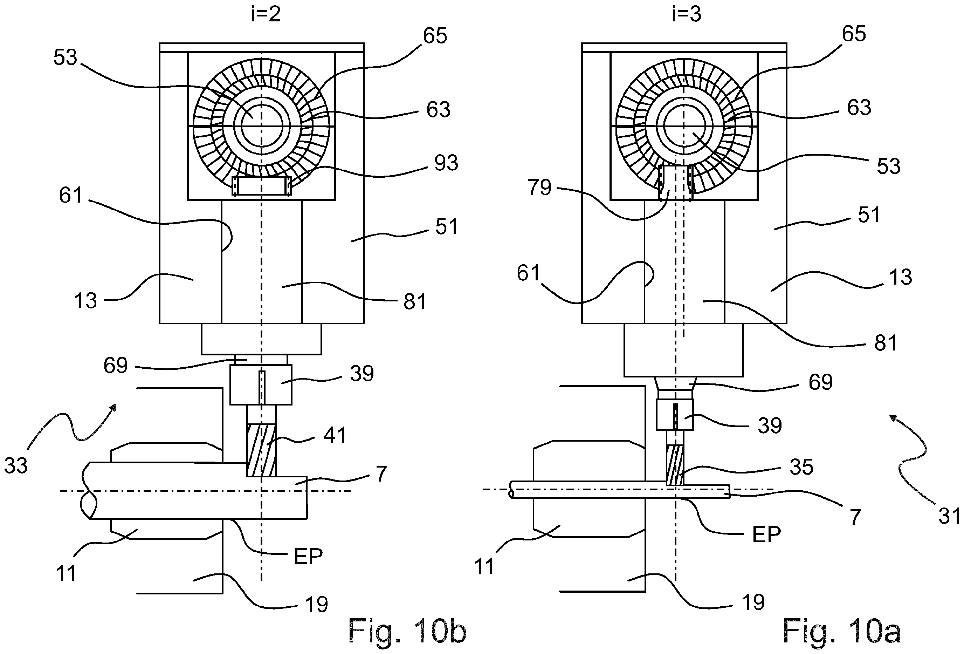

Das zuvor im Zusammenhang mit den Figuren 3, 8 und 9 Gesagte soll noch einmal anhand der Figur 10 verdeutlicht werden. In der Figur 10a sind das zu bearbeitende relativ dünne Stangenmaterial 7 und die Führungsbuchse 11 dargestellt. Diese Bauteile bzw. das Stangenmaterial 7 sind ortsfest, während der Schlitten 13 und die an ihm befestigten angetriebenen Werkzeughalter 31 (siehe Fig. 10 b) und 33 (siehe Fig. 10 b) sich in Richtung der Y-Achse relativ zu dem Stangenmaterial 7 und der Führungsbuchse 11 bewegen können.

In den angetriebenen Werkzeughalter 31 ist ein Werkzeug 35 mit einem kleinen Durchmesser eingespannt. Gespannt wird das Werkzeug 35 mit Hilfe einer Spannmutter 39.

Weil das Werkzeug 35 einen kleinen Durchmesser und damit auch einen dünnen Schaft hat, kann die Spannmutter 39 ebenfalls einen relativ kleinen Durchmesser D₁ aufweisen.

Die Drehachse der Spindel 69 ist bei diesem Werkzeughalter 31 versetzt/exzentrisch zu dem Aufnahmeabschnitt 81 bzw. der Aufnahme 61 des Werkzeugschlittens 13.

Der Werkzeughalter 33 (siehe Fig. 10 b) nimmt ein Werkzeug 41 auf, dessen Durchmesser sehr viel größer ist, als der des Werkzeugs 35. Infolgedessen sind auch der Schaft (nicht sichtbar) des Werkzeugs 41 dicker und ein Durchmesser der Spannmutter 43 größer als der Durchmesser der Spannmutter 39.

Allgemein kann man sagen, dass je kleiner der Durchmesser der Spannmuttern 39 bzw. 43 ist, desto näher kann man mit dem Werkzeug 35 bzw. 41 in einem der angetriebenen Werkzeughalter 31, 33 an die Führungsbuchse 11 der Konsole 19 heranfahren. In anderen Worten: Die Bearbeitung von Stangenmaterial 7 kann bei beiden Werkzeughaltern 31 und 33 in unmittelbarer Nähe des Einspannpunkts EP erfolgen.

Bei dem Werkzeughalter 31, wie er in der Figur 10a dargestellt ist, kämmt das Ritzel 79, welches mit der Spindel 69 drehfest verbunden ist, mit dem treibenden Kronenrad 63. Dadurch ergibt sich eine Übersetzung von beispielsweise i = 3. Vorausgesetzt, dass die Antriebswelle 53 eine Drehzahl von maximal 6000/min hat, dann lässt sich an der Spindel 69 bzw. dem Werkzeug 35 eine Drehzahl von bis zu 18000/min realisieren. Durch den Versatz bzw. die Exzentrizität zwischen der Aufnahme 61 des Werkzeughalters 31 im Gehäuse 51 des Schlittens 13 und der Drehachse der Spindel 69 rückt das Werkzeug 35 bei diesem Werkzeughalter näher an die Führungsbuchse 11 heran, so dass vor allem bei kleinen Durchmessern des Stangenmaterials 7 die Durchbiegung minimiert wird.

In der Figur 10b ist ein Werkzeughalter dargestellt, bei dem die Drehachse der Spindel 69 konzentrisch zu der Aufnahme 61 angeordnet ist. Dadurch rückt die Spindel 69 etwas weiter nach rechts in der Figur 10b, verglichen mit der Situation in der Figur 10a. Dann entsteht mehr Platz zwischen der Spannmutter 39 und der Konsole 19, welche die Führungsbuchse 11 trägt. Das ist bei dieser Situation unproblematisch, weil das Stangenmaterial 7 einen relativ großen Durchmesser hat und daher biegesteifer ist. Außerdem kämmt bei diesem Ausführungsbeispiel das Ritzel 93 mit dem Kronenrad 65. Dadurch ergibt sich ein anderes Übersetzungsverhältnis von beispielsweise i = 2. Infolge dessen ist die Drehzahl der Spindel 69 bei dem Werkzeughalter 33 geringer. Gleichzeitig können bei gleichem Eingangsdrehmoment größere Drehmomente am Werkzeug 41 bereitgestellt werden.

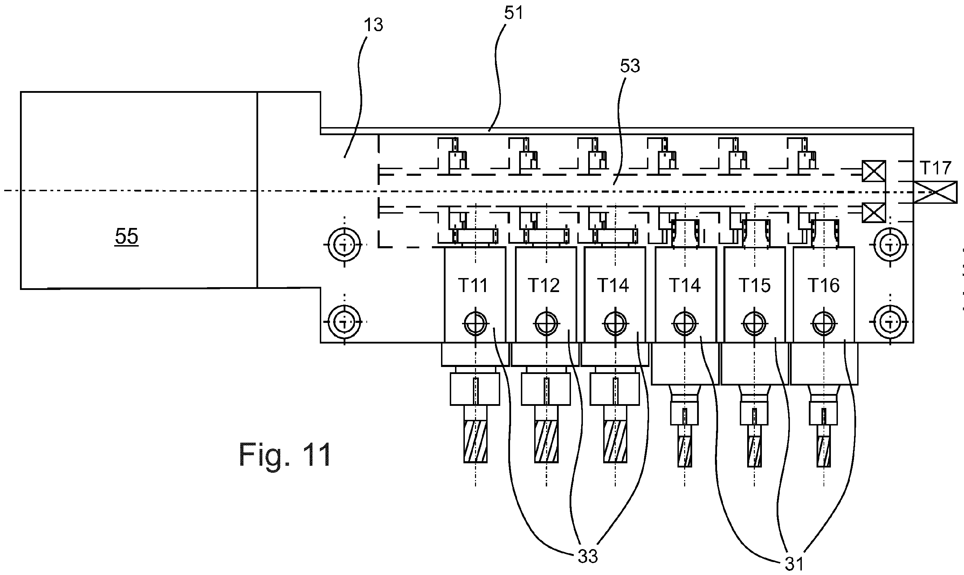

In der Figur 11 ist exemplarisch ein Werkzeugschlitten 13 dargestellt, bei dem sechs Aufnahmen 61 für angetriebene Werkzeughalter vorhanden sind. Die links angeordneten Werkzeughalter T11, T12 und T13 sind Werkzeughalter 33, bei denen keine Exzentrizität zwischen der Aufnahme und der Drehachse der Spindel vorhanden ist. Die rechts angeordneten Werkzeughalter T14, T15 und T16 (Bezugszeichen 31) weisen den erfindungsgemäßen Versatz zwischen Drehachse der Spindel und der Aufnahme im Werkzeugschlitten auf.

## Patentansprüche

1. Werkzeughalter für einen Langdrehautomaten umfassend ein Gehäuse (67b), eine in dem Gehäuse (67b) drehbar gelagerte Spindel (69), wobei an einem Ende der Spindel (69) ein angetriebenes Ritzel (79) oder ein angetriebenes Kegelrad und an einem entgegengesetzten Ende der Spindel (75) eine Werkzeugaufnahme (75) angeordnet sind, wobei das Gehäuse (67b) einen Aufnahme-Abschnitt (81) aufweist, wobei der Aufnahme-Abschnitt (81) mit einer Aufnahme (69) eines Werkzeugschlittens (13) eines Langdrehautomaten zusammenwirkt und wobei eine Drehachse (89) der Spindel (69) exzentrisch (e) zu dem Aufnahme-Abschnitt (81) des Gehäuses (67b) verläuft.

2. Werkzeughalter für einen Langdrehautomaten umfassend ein Gehäuse (67a), eine in dem Gehäuse (67a) drehbar gelagerte Spindel (69), wobei an einem Ende der Spindel (69) ein angetriebenes Ritzel (93) oder ein angetriebenes Kegelrad und an einem entgegengesetzten Ende der Spindel (69) eine Werkzeugaufnahme (75) angeordnet sind, wobei das Gehäuse (67a) einen Aufnahme-Abschnitt (81) aufweist, wobei der Aufnahme-Abschnitt (81) mit einer Aufnahme (69) eines Werkzeugschlittens (13) eines Langdrehautomaten zusammenwirkt und wobei eine Drehachse (89) der Spindel (69) konzentrisch zu dem Aufnahme-Abschnitt (81) des Gehäuses (67a) verläuft.

3. Werkzeughalter nach Anspruch 1 oder 2, **dadurch gekennzeichnet, dass** der Aufnahme-Abschnitt (81) im Querschnitt polygonförmig, bevorzugt quadratisch, oder kreisförmig ist und optional einen Vorzentrierstift umfasst.

4. Werkzeughalter nach einem der vorhergehenden Ansprüche, **dadurch gekennzeichnet, dass** das angetriebene Ritzel (79) oder das angetriebene Kegelrad eine Verzahnung aufweist, die einer Hypoid-Verzahnung ähnelt.

5. Werkzeugschlitten (13) zur Aufnahme angetriebener Werkzeughalter (31, 33) umfassend eine Antriebswelle (53) und mindestens eine Aufnahme (61) für einen Werkzeughalter (31, 33), wobei die Antriebswelle (53) im Bereich der mindestens einen Aufnahme (61) mindestens ein treibendes Kronenrad (63) oder ein treibendes Kegelrad aufweist, dass das Kronenrad (63) mit dem angetriebenen Ritzel (79) eines in die Aufnahme (61) eingesetzten Werkzeughalters (31) kämmt oder dass das treibende Kegelrad mit dem angetriebenen Kegelrad eines in die Aufnahme (61) eingesetzten Werkzeughalters (31) kämmt.

6. Werkzeugschlitten (13) nach Anspruch 5, **dadurch gekennzeichnet, dass** im Bereich der mindestens einen Aufnahme (61) ein zweites treibendes Kronenrad (65) oder ein zweites treibendes Kegelrad angeordnet ist, und dass mindestens eines der treibenden Kronenräder (63, 65) oder der treibenden Kegelräder eine Verzahnung aufweist, die einer Hypoid-Verzahnung ähnelt.

7. Werkzeugschlitten (13) nach Anspruch 5 oder 6, **dadurch gekennzeichnet, dass** er ein Gehäuse (51) umfasst, und dass in dem Gehäuse (51) die Antriebswelle (53) drehbar gelagert und die mindestens eine Aufnahme (61) ausgebildet ist.

8. Werkzeugschlitten (13) nach einem der Ansprüche 5 bis 7, **dadurch gekennzeichnet, dass** die Antriebswelle (53) ein Mitnehmerelement (59) aufweist.

9. Werkzeugschlitten (13) nach Anspruch 8, **dadurch gekennzeichnet, dass** das Mitnehmerelement (59) zum Antrieb eines Zusatzaggregats, insbesondere einer Vorrichtung zum Gewindewirbeln oder zum Fräsen von Verzahnungen, eingerichtet ist.

10. Werkzeugschlitten (13) nach Anspruch 9, **dadurch gekennzeichnet, dass** das Zusatzaggregat an dem Gehäuse (51) angeflanscht ist.

11. Werkzeugschlitten (13) nach einem der Ansprüche 5 bis 10, **dadurch gekennzeichnet, dass** an dem Gehäuse (51) ein Antriebsmotor (55) angeflanscht ist.
